# EUROPEAN PATENT APPLICATION

(11) **EP 0 859 500 A2**
(43) Date of publication of application: **19.08.1998**
(21) Application number: 98301133.9
(22) Date of filing: 17.02.1998
(51) Int. Cl.: H04M 3/50, H04M 7/00

(54) **Method and apparatus for browsing the Internet with a telecommunications device**

(30) Priority: 18.02.1997 US 801667
(71) Applicant: LUCENT TECHNOLOGIES INC., Murray Hill, New Jersey 07974-0636 (US)
(72) Inventor: Chen, Kuo-Wei Herman, Scotch Plains, New Jersey 07076 (US); Woo, Thomas Yat Chung, Red Bank, New Jersey 07701 (US); Sabnani, Krishan K., Westfield, New Jersey 07090 (US)
(74) Representative: Buckley, Christopher Simon Thirsk

(57) **Abstract**

In a method and apparatus for browsing the World Wide Web (50) with a telecommunications device (10) a gateway system (40) provides the necessary communications links, data format changes and protocol conversions to permit a user desiring specific information from the Web to obtain that information via telephone (10) or pager, in either spoken word or alphanumeric form, in response to spoken word or DTMF requests.

## Description

### FIELD OF THE INVENTION

The present invention is directed to a method and apparatus for communicating with Internet-based programs and information services via telecommunication devices that are not or cannot be readily equipped with browser software, such as telephones, cellular telephones with alphanumeric displays, pagers, alphanumeric terminals and the like.

### BACKGROUND OF THE INVENTION

In recent years, Internet-based services, specifically information placed on the World Wide Web (the "Web") such as weather reports, stock quotes, lottery results, horoscopes and the like, have experienced exponential growth. More and more end users each day obtain and utilize personal computers ("PCs") equipped with modems and software that permit users to "browse" or view such applications. Unfortunately, while vast amounts of additional information become available each day, most end users are not able to access this information when away from their PC, since without a powerful processor, browser software, adequate memory and a modem, the applications that provide this information cannot be reached. These same end users, however, are likely to possess telephones or data terminal devices that have limited processing power and simple, alphanumeric displays. Additionally, such users are generally familiar with the now ubiquitous telephonic speech response (TSR) systems, also known as interactive voice systems (IVS), that provide spoken information to users in response to the user's input of TOUCH-TONE^{tm} (Dual Tone Multi Frequency or DTMF) signals via entries on the telephone keypad, or in response to the user's spoken words.

While most if not all of the Web applications which provide information such as that mentioned above are graphic in nature, the information content typically sought by the end user is simple alphanumeric, non-graphic information -- i.e. text. The graphics are typically provided to make the application simpler to use, commercially attractive, or to provide hyper-text (HTML) links to related information or advertising information placed in the application by commercial sponsors. Frequent users who seek specific information embedded in such applications have little or no real need to view or interact with these graphics, yet have no alternative but to navigate through such graphics to reach the data actually desired. Moreover, it is the graphical content that makes these applications so resource intensive at the PC level. Since no solution presently exists in the prior art which addresses and solves the above mentioned shortcomings, it would be greatly advantageous to provide a communications platform that provides access to these Web based information services from a conventional telephone or simple alphanumeric terminal device such as a cellular phone without the need for a PC and browser software, in much the same way as TVS-based systems provide it now. The present invention provides just such a platform.

### SUMMARY OF THE INVENTION

The present invention provides a platform by which users having a conventional telephone instrument may access Web-based applications without the need for a PC and browser software. As used herein, the term telephone instrument is defined as any communications device, with or without an alphanumeric display, such as, by way of non-limiting example, an analog cellular telephone, a digital cellular phone with or without Personal Communication Services (PCS), a wireless phone, a wired (corded) phone, a personal digital assistant (PDA) (such as the Apple NEWTON^{tm}), a pager, an ASCII terminal, a PC without a browser, and the like. The alphanumeric display may be an LED, LCD, CRT, active matrix, or any other display device capable of displaying alphanumeric characters.

A user wishing to access information found in a Web-based application in accordance with the present invention will dial through the standard telephone network or cellular network into a gateway processor located either at a dedicated processing location or in the telephone network itself. The gateway processor is equipped with IVS hardware and software for communicating with the user via voice prompts that elicit from the user the information desired in a manner well known in the art. The user's request is then translated by software in the gateway processor, which in turn communicates with the Web and handles logging in, providing the universal resource locator (URL) address and accessing the desired Web application. The gateway processor then navigates through the application to access the information desired by the user. Software in the gateway processor "reads" the Web page or pages which contain the desired information and translates it, i.e. protocol converts it, into alphanumeric characters which are then relayed over the phone line to the user's telephone instrument to be read by the user. The user has thus "browsed" the Web application without the need for a PC and browser software. Alternatively, the gateway may cause the IVS system to audibly "speak" the results to the end user, thereby eliminating the need for any display at the telephone instrument.

The gateway service may be furnished by the provider of the Web page, or by a third party that provides Web software "translation" services. Further, for frequent users, or for the appropriate application, the service may be adapted to take advantage of the new direct data uplink protocols utilized in, for example, digital cellular phones and alphanumeric pagers. In this way, a user can send a specific, digitally coded request via wireless data uplink, eliminating the need to make a traditional telephone call and utilize DTMF keypad sequences. A single coded sequence will signal the gateway that the user wishes to receive, for example, the daily lottery numbers. The gateway will access the appropriate Web application and perform the conversions described above, sending alphanumeric characters representing the daily lottery results via wireless data link directly to the end user with no phone call ever having been established.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims.

### BRIEF DESCRIPTION OF THE DRAWINGS

In the drawings, wherein like reference characters denote similar elements throughout the several views:
Fig. 1 depicts the system architecture of a preferred embodiment of the instant invention;
Fig. 2 depicts the protocol architecture of a preferred embodiment of the system of the instant invention;
Fig. 3 depicts an alternate embodiment of the system architecture depicting the utilization of a direct data uplink; and
Fig. 4 depicts the protocol architecture of the system of the instant invention utilizing direct data uplink.

### DESCRIPTION OF THE PREFERRED EMBODIMENTS

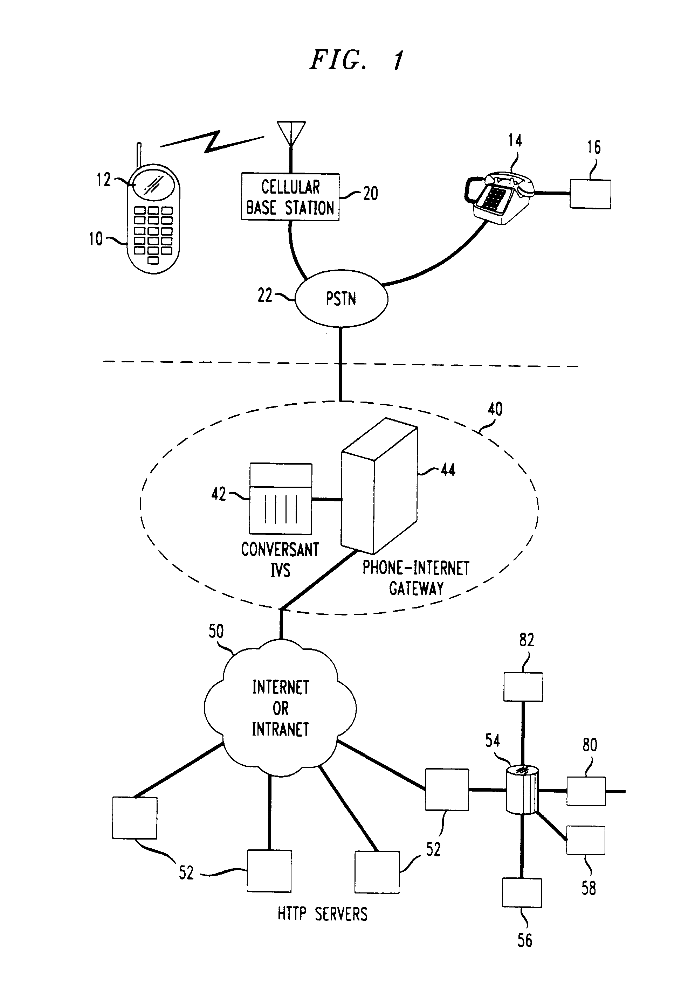

With initial reference to Fig. 1, there is depicted a diagrammatic representation of the system architecture of the present invention. A user (not shown), utilizing a telephone instrument 10 that is optionally equipped with an alphanumeric display 12, and desirous of accessing a Web application 54 stored in one of many HTTP servers 52 linked through the Internet network 50, places a telephone call through a cellular base station 20. As used herein, the term Internet shall be defined as including both the ubiquitous public Internet network and private networks utilizing Internet-like architectures, known by those skilled in the art as Intranets.

Alternatively, a user may place the call using a non-cellular phone 14 equipped with or without optional alphanumeric display 16. In either case the call is switched in the ordinary manner through the Public Switched Telephone Network (PSTN) 22 to the Internet gateway 40. Internet gateway 40 may be located within and as a part of the PSTN, or located in one or many locations, as the anticipated call volume warrants. The design of the communication links between the cellular base station 20, telephone 14, PSTN 22, gateway 40 and the Internet 50 is well known and considered to be well within the abilities of the routineer in the telephony arts and, since it does not form a part of the instant invention, will not be discussed further herein.

At the gateway 40 there is a phone-Internet gateway processor 44 which contains hardware and software for running gateway applications required to implement the system of the present invention. Also at the gateway 40 is an IVS device 42 for providing speech response services under the control of gateway processor 44. Gateway processor 44 is typically a general purpose digital computer such as a Pentium^{tm} microprocessor-equipped PC, a networked group of PCs or equivalent, or a mini-computer or mainframe or equivalent, as processing and communication requirements dictate. IVS device 42 may be an add-on circuit board and associated software in the gateway processor 44 such as, by way of non-limiting example, the type provided by Dialogics, Inc., or it may be an external processor such, for example, as the Conversant Interactive Voice Information System provided by Lucent Technologies Inc., or their art recognized equivalents. Regardless of the particular implementation chosen, IVS device 42 and gateway processor 44 together are capable of receiving and processing DTMF tones and/or spoken words, and of outputting alphanumeric characters and/or spoken words, as application needs dictate. As used herein the term software is defined as including the application software code, firmware and/or specific hardware required to perform specific functions in the gateway processor 44 and/or the IVS device 42. The specific implementation of the gateway processor and IVS device in the gateway 40 is a matter of design choice and is considered to be well within the scope of knowledge of the person of skill in the art.

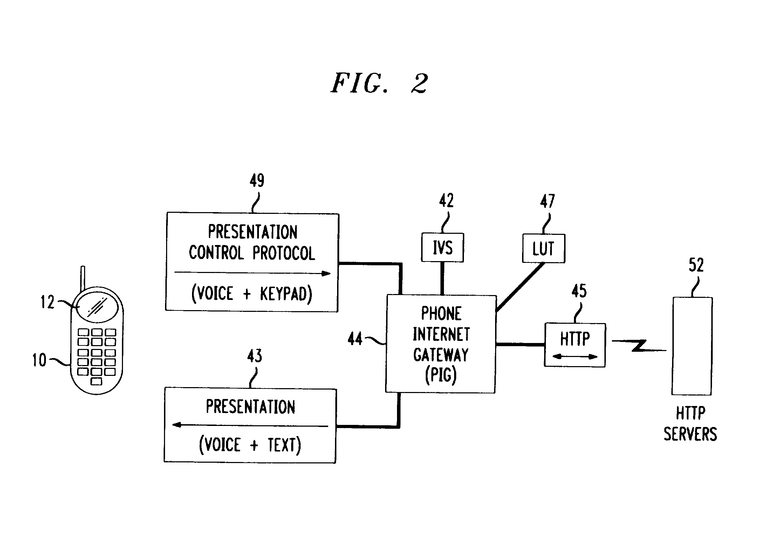

Referring now to Fig. 2, the protocol architecture of the present invention is depicted showing telephone instrument 10 communicating with gateway 40. As shown in Fig. 1, the connection to the gateway 40 may be through a cellular or wired connection through the PSTN 22, and the following description is equally applicable to both. Gateway presentation control software 41 in the gateway 40 provides the protocol support to receive spoken word voice and/or DTMF keypad instructions from the user's telephone instrument 10. Gateway processor 44 also contains the Web address software 47 necessary to accept the converted user commands and determine from which Web application on the Internet the user desires or requires information. This can be implemented via a database of Internet applications stored in gateway processor 44, lookup tables, or other equivalent art recognized techniques. Alternatively, the user may speak or enter via the DTMF keypad the URL address of the desired Web application, as a general matter of design choice. In any event, gateway 40 establishes a connection to the Internet 50, and accesses the desired HTML page using the HTTP protocol according to commonly known techniques.

With continued reference to Figs. 1 and 2, after gateway 40 requests the appropriate HTML page from the appropriate HTTP server 52, and the HTTP server 52 provides that page, software in gateway 40 "reads" the HTML page (or pages if necessary) via HTTP protocol software 45 and extracts the specific content pertinent to the user's information request. The extracted information is then converted via user presentation control software 43 to the appropriate end user-related protocol, i.e. either spoken voice, alphanumeric text, or a combination of both, and transmitted through the PSTN 22 to the user's telephone instrument. Alphanumeric text, if sent, would be displayed on display 12 or 16, depending on the telephone instrument in use.

The selection of the appropriate user presentation protocol by gateway 40 may be implemented by dedicating certain telephone numbers to be called by the user depending on the type of telephone instrument used, or it may be selected by the user in response to voice prompts spoken by the IVS system. Alternatively, the presentation protocol may be automatically selected by the gateway processor 44 as a function of how the user's request for information is transmitted to the gateway 40, e.g. alphanumeric text only if the request is received in the form of wireless packet data, as further discussed hereinbelow. As used herein the term wireless packet is defined as any digital packet data transmission methodology wherein a packet of data is transmitted via wireless communication media, such as, by way of non-limiting example, Cellular Digital Packet Data (CDPD), Short Messaging Service (SMS), the IS 136 or IS 95 communication standards, or their art-recognized equivalents.

The specific implementation of gateway presentation software 41, user presentation control software 43, and HTTP protocol software 45 is a routine matter of software design choice. The aforementioned applications may be implemented using, as a general matter of design choice, any of a number of available higher level programming languages such, by way of non-limiting example, as C or C++, in any of a number of operating environments, e.g. Microsoft Windows^{tm}, UNIX^{tm}, Windows NT^{tm}, etc. Such software design is well within the abilities of one skilled in the art having been provided with the application requirements described herein.

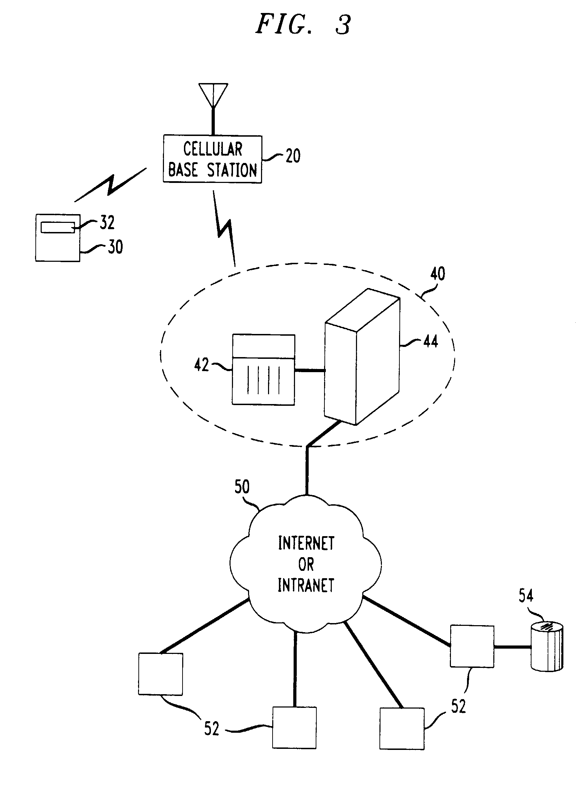

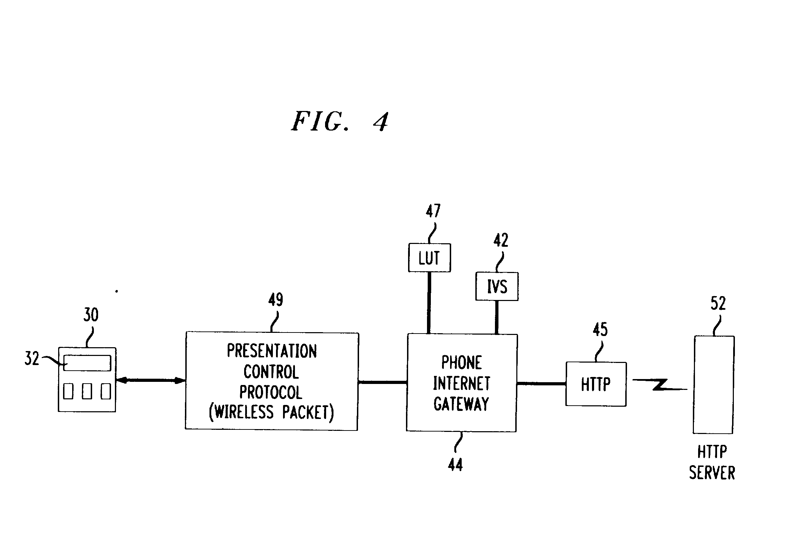

An alternate architecture, depicted in Figs. 3 and 4, is utilized when the user possesses a digital cellular telephone instrument 30 equipped for wireless packet data service. Such a device may also be a wireless packet-capable pager. In such an implementation, the user sends a request to the cellular base station 20 that bypasses the PSTN to be directly routed to gateway 40, where it is interpreted in gateway processor 44 as a request for a particular type of Web information. In this alternate implementation, Gateway processor 44 additionally contains wireless packet data presentation control software 49 (Fig. 4) which performs the necessary conversion of the packets into requests understood by HTTP protocol software 45. The gateway 40 then accesses the Internet 50, reads the HTML page and extracts the desired information in the same manner as that described above. The extracted information is then converted back to packets by wireless packet data presentation control software 49 and transmitted back to the user via cellular base station 20 for display on the alphanumeric display 32 of telephone instrument 30. Thus, by using wireless packet services, the user need not establish a traditional phone call to extract simple information from the Internet.

It is contemplated that the system of the present invention will encourage and cause Web application providers to tailor their applications to render them more amenable to access by phone. Presently, there do exist some text-only Web pages that are so designed for reducing page transfer time and/or for accommodating non-graphical browsers. It is likely that increasing demand for phone access in accordance with the present invention will lead to new HTML pages with HTML "tags" for voice-assisted browsing over phones. For example, and referring once again to Fig. 1, a "summary" tag 56 could be added to the Web application to provide a synopsis of a paragraph or page. For brevity, the summary may be relayed to the user first, and the full paragraph or page thereafter relayed only upon receipt of a specific user request. Such added functionality may be implemented in a number of ways, as for example at the HTML page itself or within the Web application as Java downloadable application code 58. In the case of Java code, the Web application 54, in response to the selection of a special "phone access" tag 80 in the Web application, will download a special "phone enabling" script 82 to be run at the gateway 40. The script, when executed, will deliver the desired information to the user in the appropriate voice and/or text format, as described above.

Thus, while there have been shown and described and pointed out fundamental novel features of the invention as applied to preferred embodiments thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. It is the intention, therefore, to be limited only as indicated by the scope of the claims appended hereto.

## Claims

1. An apparatus for providing access to World Wide Web ("Web") information without requiring use of a Web browser, comprising:
means for receiving an information request from a user via a telephone instrument;
means for identifying a location on the Web where said requested information is located;
means for accessing said Web location;
means for retrieving said requested information from said Web location; and
means for providing said requested information to said user via said telephone instrument.

2. The apparatus of claim 1, wherein said means for receiving said information request comprises:
means, connected to a telephone network, for receiving a telephone call from said user; and
means, connected to said call receiving means, for interpreting instructions transmitted by said user during said telephone call, said instructions forming said information request and being transmitted in a request format.

3. The apparatus of claim 2, wherein said interpreting means interprets request formats selected from a group of formats consisting of DTMF keypad entries, spoken commands, and a combination of spoken commands and DIME keypad entries.

4. The apparatus of claim 3, wherein said means for providing said requested information comprises:
means, connected to said retrieving means, for converting said retrieved information into a format transmittable to said telephone instrument and capable of being understood by said user; and
means for transmitting said converted information to said user via said telephone network.

5. A method of providing access to World Wide Web ("web") information without required use of a Web browser, comprising the steps of:
(a) receiving at an automated processing device an information request from a user via a telephone instrument;
(b) identifying by the automated processing device a location on the Web where said requested information is located;
(c) accessing by the automated processing device said Web location;
(d) retrieving by the automated processing device said requested information from said Web location; and
(e) providing by the automated processing device said requested information to said user via said telephone instrument.

6. The method of claim 5, wherein said step (a) comprises:
receiving said information request via a telephone network operable for carrying telephone calls from said user; and
interpreting instructions transmitted by said user during said telephone call, said instructions forming said information request and being transmitted in a request format.

7. The method of claim 6 , wherein said interpreting step comprises interpreting request formats selected from a group of formats consisting of DIME keypad entries, spoken commands, and a combination of spoken commands and DTMF keypad entries.

8. The method of claim 7, wherein said step (e) comprises:
converting said retrieved information into a format transmittable to said telephone instrument and capable of being understood by said user; and
transmitting said converted information to said user via said telephone network.

9. A method of making desired World Wide Web ("Web") information amenable to dissemination to a user via a telephone instrument, comprising the steps of:
including, as part of an automated Web application containing desired information, an application portion which is relayable to a user utilizing a telephone instrument;
determining that said user is desirous of receiving said information at a telephone instrument rather than a software browser-equipped computing device; and
relaying said application portion to said user.

10. A method of accessing information stored at a web site of a world wide web in which said accessing is done without using a web browser, said method comprising the steps of:
at an automated processing device, receiving from a user via a telephone line request for said information;
processing said request to identify said web site where said information is stored;
accessing said web site via the world wide web to obtain a copy of said stored information;
receiving said information from said web site via the world wide web; and
providing the requested information to the user via said telephone line.
